# EUROPEAN PATENT APPLICATION

(11) **EP 4 840 681 A1**
(43) Date of publication of application: **18.11.2026**
(21) Application number: 26176423.7
(22) Date of filing: 05.05.2026
(51) Int. Cl.: B60L 53/35, B60L 53/00, B60L 53/10, B60L 53/12, B60L 53/14, B60L 53/30, B60L 53/31, B60L 53/36, B60L 53/37, B60L 53/38, B60L 53/39, B60L 53/60, B60L 53/65, B60L 53/66, B60L 53/68, B60W 60/00, B62D 15/02

(54) **METHODS AND SYSTEMS FOR AUTONOMOUS OPERATION FOR CHARGING OF BATTERY OF VEHICLE WITHIN OPERATIONAL AREA**

(30) Priority: 15.05.2025 FI 20253195
(71) Applicant: Unikie Oy, 33720 Tampere (FI)
(72) Inventor: Sormunen, Toni, 33880 Lempäälä (FI); Kiviranta, Vesa, 33400 Tampere (FI)
(74) Representative: Moosedog Oy

(57) **Abstract**

Disclosed is a system (100) and a method (300) for autonomous operation for charging of a battery of a vehicle within an operational area (102) having one or more charging stations (108). The method comprises receiving, at a control unit (106), a vehicle charging request for the vehicle; designating a charging station (108) available to charge the battery of the vehicle; receiving, at the control unit, from a plurality of sensors (104), tracking data related to objects present within the operational area; processing the tracking data to generate a real-time digital map of the operational area; generating an autonomous vehicle movement plan based on the digital map and a location of the designated charging station; establishing a communication link with the vehicle; controlling autonomous movement of the vehicle from a current location to the location of the designated charging station; and managing charging operations therefor.

## Description

### TECHNICAL FIELD

The present disclosure relates to methods for managing autonomous charging operations of vehicles within restricted operational areas. Furthermore, the present disclosure relates to systems for managing autonomous charging operations of vehicles within restricted operational areas.

### BACKGROUND

In modern urban and industrial environments, electric vehicles are becoming increasingly prevalent for both personal and commercial transportation needs. These environments often have restricted operational areas such as parking facilities, logistics depots, and industrial sites where multiple electric vehicles need to be charged efficiently. The charging infrastructure in such environments typically consists of multiple charging stations that need to be shared among various vehicles requiring charging services.

The conventional approach to electric vehicle charging in restricted areas relies heavily on manual intervention, requiring vehicle owners or operators to physically move vehicles between parking spots and charging stations. This manual process is time-consuming, labour-intensive, and often leads to inefficient utilization of charging resources. Additionally, in facilities with a large number of vehicles, coordinating the movement and charging of multiple vehicles becomes increasingly complex and challenging to manage effectively.

Current solutions attempt to address these challenges through basic scheduling systems and manual coordination. Some facilities employ simple reservation systems where users can book charging slots in advance. Other solutions use basic monitoring systems that provide information about charging station availability. However, these solutions still require manual vehicle movement and do not offer comprehensive integration between charging management and autonomous vehicle control.

Existing charging management systems suffer from several limitations. First, they lack the capability to autonomously move vehicles between parking spaces and charging stations, resulting in dependency on human operators for vehicle movement. Second, they do not provide real-time monitoring and coordination of multiple vehicles in the operational area, leading to potential conflicts and inefficient resource utilization. Third, conventional systems fail to integrate charging management with autonomous vehicle control systems, making it difficult to optimize the overall charging process.

Therefore, in light of the foregoing discussion, there exists a need to overcome the aforementioned drawbacks associated with conventional vehicle charging management systems. Specifically, there is a need for a method and a system that can autonomously manage vehicle charging operations while efficiently coordinating vehicle movements within restricted operational areas.

### SUMMARY

The aim of the present disclosure is to provide a method and a system to enable autonomous operation for charging of vehicle batteries within operational areas having charging stations.

The aim of the disclosure is achieved by a method and a system for autonomous operation for charging of a battery of a vehicle within an operational area having one or more charging stations as defined in the appended independent claims to which reference is made to. Advantageous features are set out in the appended dependent claims.

Throughout the description and claims of this specification, the words "comprise", "include", "have", and "contain" and variations of these words, for example "comprising" and "comprises", mean "including but not limited to", and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 is a schematic illustration of a system for autonomous operation for charging of a battery of a vehicle within an operational area, in accordance with an embodiment of the present disclosure;
FIG. 2 is a block diagram of data flows within the control unit of the system shown in FIG. 1, in accordance with an embodiment of the present disclosure; and
FIG. 3 is a flow diagram of steps of a method for autonomous operation for charging of a battery of a vehicle within an operational area, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides a method for autonomous operation for charging of a battery of a vehicle within an operational area having one or more charging stations, the method comprising:
receiving, at a control unit, a vehicle charging request for the vehicle;
designating a charging station of the one or more charging stations available to charge the battery of the vehicle based on the received vehicle charging request;
receiving, at the control unit, from a plurality of sensors arranged to monitor the operational area, tracking data related to objects present within the operational area;
processing, at the control unit, the tracking data to generate a real-time digital map of the operational area with positions of objects therein;
generating an autonomous vehicle movement plan for the vehicle based on the generated real-time digital map and a location of the designated charging station in the operational area;
establishing a communication link with the vehicle;
controlling, by the control unit, via the communication link, autonomous movement of the vehicle from a current location of the vehicle to the location of the designated charging station according to the autonomous vehicle movement plan; and
managing, by the control unit, charging operations for the vehicle at the designated charging station.

The present method provides enhanced efficiency and safety in autonomous vehicle charging operations. The method achieves this through synergistic interaction between processes, in which the real-time tracking data is processed from multiple sensors to maintain complete situational awareness of the operational area, while simultaneously managing both vehicle movement and charging operations. Further, the sensor tracking data is transformed into a digital map that enables safe autonomous navigation, while the communication link ensures reliable control over vehicle movements. This approach allows the present method to dynamically respond to changing conditions in the operational area, such as detecting and avoiding obstacles, while maintaining efficient charging operations. The ability to both manage charging operations and control vehicle movements provides an end-to-end autonomous charging solution that eliminates the need for manual intervention, thereby increasing operational efficiency and reducing human error risks.

In a second aspect, the present disclosure provides a system for autonomous operation for charging of a battery of a vehicle within an operational area having one or more charging stations, the system comprising:
a plurality of sensors arranged to monitor the operational area;
a control unit communicatively coupled to the plurality of sensors and configured to:
   receive a vehicle charging request for the vehicle;
   designate a charging station of the one or more charging stations available to charge the battery of the vehicle based on the received vehicle charging request;
   receive, from the plurality of sensors, tracking data related to objects present within the operational area;
   process the tracking data to generate a real-time digital map of the operational area with positions of objects therein;
   generate an autonomous vehicle movement plan for the vehicle based on the generated real-time digital map and a location of the designated charging station in the operational area;
   establish a communication link with the vehicle;
   control, via the communication link, autonomous movement of the vehicle from a current location of the vehicle to the location of the designated charging station according to the autonomous vehicle movement plan; and
   manage charging operations for the vehicle at the designated charging station.

The present system achieves significant improvements in autonomous vehicle charging management through its integrated hardware and software architecture. The plurality of sensors work cooperatively to provide monitoring of the operational area, while the control unit acts as a central hub that processes this sensor data and coordinates all aspects of vehicle charging operations. The architecture of the system enables real-time processing of sensor data to maintain an accurate digital map of the environment, as required for safe autonomous vehicle navigation. The integrated management of both vehicle movement and charging operations using the control unit allows for optimal resource utilization and minimal waiting times. The ability of the present system to handle multiple vehicles and charging stations simultaneously, while maintaining safety through constant environmental monitoring, represents an advancement over conventional manual charging management approaches, creating a scalable solution that can adapt to various operational area configurations and vehicle types.

In the context of the present disclosure, the term "operational area" refers to a defined physical space where vehicle charging operations are managed. The operational area may be an indoor environment such as a parking garage, an outdoor environment such as a logistics depot, or a combination thereof. The operational area includes designated spaces for vehicle parking and one or more charging stations positioned at strategic locations within the space. The operational area, generally, has defined boundaries that are monitored by the plurality of sensors to maintain complete situational awareness. The operational area may also include specific zones such as entrance/exit points, driving lanes, and restricted access areas that must be considered during autonomous vehicle navigation.

Further, the term "charging station" refers to an electrical power delivery unit configured to supply electrical power to charge vehicle batteries. Each charging station includes power conversion equipment, safety systems, a physical connector interface, and communication capabilities to interact with both vehicles and the control unit. The charging stations may support various charging standards and power levels to accommodate different vehicle types. Each charging station is equipped with sensors to monitor charging status, connection status, and surrounding area safety conditions. The charging stations are networked with the control unit to enable remote monitoring and control of charging operations.

The method includes receiving, at the control unit, the vehicle charging request for the vehicle. Herein, the "control unit" refers to a computational element or a collection of computational elements configured to process data and control operations within the system. The control unit comprises one or more processors, memory modules, and communication interfaces that enable it to receive sensor data, process information, make decisions, and issue control commands. The control unit may be implemented as a centralized server or distributed across multiple processing nodes within the operational area. The control unit executes various software modules that handle different aspects of the autonomous charging operations, such as sensor data processing, vehicle tracking, path planning, and charging management.

Further, the term "vehicle charging request" refers to a data structure containing information required to initiate and manage a charging session for a vehicle. The vehicle charging request includes, but is not limited to, vehicle identification information, current battery status, desired charge level, time constraints, payment information and any specific charging requirements. The vehicle charging request may be generated automatically by vehicle systems when the vehicle may enter the operational area, or when battery level falls below a threshold, or it may be initiated manually through a user interface. The vehicle charging request serves as a trigger for the control unit to begin the autonomous charging process.

The control unit receives the vehicle charging request through a communication interface, which may utilize wireless protocols such as Wi-Fi, cellular networks, or dedicated short-range communication (DSRC). Upon receiving the vehicle charging request, the control unit validates the request parameters and checks authorization credentials before proceeding with the charging operation. This validation ensures that only authorized vehicles can access the charging services and helps maintain security of the charging infrastructure. By centralizing the receipt and processing of charging requests at the control unit, the present method can efficiently manage multiple charging requests simultaneously and implement sophisticated scheduling algorithms. Additionally, the automated request handling eliminates human error in request processing and reduces the administrative overhead associated with manual charging management.

The method further includes designating the charging station of the one or more charging stations available to charge the battery of the vehicle based on the received vehicle charging request. For this purpose, the control unit executes an allocation algorithm to select the most appropriate charging station. The algorithm considers multiple factors including current occupancy of charging stations, proximity to the vehicle's current location, charging station capabilities, and vehicle charging requirements. The control unit maintains real-time status information for all charging stations, including their availability, charging capabilities, and any scheduled maintenance. The designation process also takes into account any specific vehicle requirements such as charging connector type or power requirements. If multiple charging stations are available, the algorithm optimizes the selection based on factors such as minimizing vehicle movement distance or balancing load across charging stations.

Such charging station designation optimizes resource utilization within the operational area. By matching vehicles to appropriate charging stations, the present method reduces wait times and minimizes unnecessary vehicle movements. This optimization leads to increased throughput of the charging infrastructure and improved energy efficiency of the overall system. Furthermore, the allocation helps prevent congestion around charging stations and ensures access to charging resources for all vehicles.

The method further includes receiving, at the control unit, from the plurality of sensors arranged to monitor the operational area, tracking data related to objects present within the operational area. Herein, the control unit continuously processes incoming data streams from multiple sensors. The plurality of sensors includes, but is not limited to, LIDAR sensors, cameras, radar sensors, and other environmental monitoring devices that collectively provide comprehensive coverage of the operational area. Each sensor is positioned to ensure overlapping coverage, with at least two sensors monitoring each point in the operational area at any given time (as discussed later in detail). The tracking data includes position information, velocity vectors, and object classification data for all detected objects. The sensors operate at different scanning frequencies and may use different detection technologies, providing complementary data that enhances object tracking.

Such multi-sensor tracking approach significantly improves safety and reliability in autonomous operations. By maintaining constant awareness of all objects in the operational area through multiple sensor types, the present method can detect and respond to potential obstacles or hazards before they pose a risk to vehicle movements. The redundancy in sensor coverage also ensures that tracking continues even if individual sensors experience temporary issues or limitations. This comprehensive tracking capability enables safe autonomous vehicle operations in dynamic environments where both static and moving obstacles must be considered.

In present embodiments, the plurality of sensors comprises a plurality of LIDAR sensors, and the operational area is monitored by the plurality of LIDAR sensors by detecting each point in the operational area using at least two LIDAR sensors of the plurality of LIDAR sensors. The LIDAR sensors are positioned at strategic locations to provide overlapping coverage of the entire operational area. The present method involves processing point cloud data from multiple LIDAR sensors to create a high-resolution three-dimensional representation of the environment. The method implements sensor fusion algorithms to combine data from multiple LIDAR sensors into a coherent environmental model. The LIDAR sensors operate at different scanning frequencies and patterns to minimize interference while maintaining continuous coverage. Herein, the overlapping sensor coverage ensures that each point in the operational area is observed from multiple angles, enabling accurate position determination through triangulation. The overlapping coverage also provides redundancy that maintains monitoring capability even if individual sensors experience temporary obstruction or malfunction.

The proposed configuration for LIDAR monitoring provides reliable object detection and tracking throughout the operational area. The multiple-sensor approach significantly reduces the likelihood of detection failures and enables accurate position determination for all objects in the operational area.

The method further includes processing, at the control unit, the tracking data to generate the real-time digital map of the operational area with positions of objects therein. The control unit may employ sensor fusion algorithms to combine data from multiple sensors into a coherent representation of the environment. The digital map is continuously updated at a high frequency to maintain accurate representation of dynamic objects. Such digital map includes both static elements such as walls, charging stations, and parking spaces, as well as dynamic elements like vehicles and pedestrians. The processing includes filtering of sensor noise, resolution of conflicting sensor readings, and maintenance of object persistence across multiple sensor frames. The digital map maintains different layers of information, including occupancy grids, semantic labels, and confidence levels for object detection.

This real-time mapping capability enables reliable autonomous navigation while maintaining operational safety. The continuously updated digital map serves as basis for path planning and obstacle avoidance algorithms. By maintaining an accurate representation of the environment, including both static and dynamic obstacles, the present method can make informed decisions about vehicle movements and adjust plans in response to changing conditions, as discussed in the proceeding paragraphs.

The method further includes generating the autonomous vehicle movement plan for the vehicle based on the generated real-time digital map and the location of the designated charging station in the operational area. For this purpose, the control unit implements path planning algorithms that consider multiple factors. The path planning takes into account constraints of the vehicle, topology of the operational area, safety margins required for operation, and the like. The movement plan includes a sequence of waypoints and associated velocity profiles that guide the vehicle from its current location to the charging station. The movement plan is continuously updated based on new sensor data to account for dynamic obstacles or changing conditions. The movement plan may also include contingency routes and backup plans that can be activated if the primary path becomes blocked or unsafe.

Such path planning optimizes vehicle movement that balances efficiency with safety. The movement plans ensure smooth trajectories that minimize energy consumption while maintaining safe distances from obstacles. By incorporating real-time updates, the present method can respond quickly to unexpected situations without compromising operational safety.

Optionally, generating the autonomous vehicle movement plan comprises:
determining a route between the current location of the vehicle and the location of the designated charging station;
establishing a safety zone around the vehicle based on the determined route;
detecting objects entering the safety zone; and
adjusting the route in response to the detected objects.

The route determination involves calculating a collision-free path that considers physical constraints of the operational area and vehicle parameters. The safety zone comprises a dynamic boundary that extends around the vehicle and along the planned route, with dimensions based on vehicle speed and environmental conditions. The safety zone calculations incorporate vehicle stopping distances, turning radii, and minimum clearance requirements for different types of detected objects. The method involves continuously monitoring the safety zone using sensor data to detect any objects that might enter the safety zone. When objects are detected within or approaching the safety zone, the route adjustment algorithms calculate alternative path segments that maintain safe separation distances.

Such safety zone feature enhances operational safety through proactive obstacle avoidance. The dynamic safety zone ensures that the vehicle maintains appropriate separation from obstacles while navigating to the charging station. The continuous monitoring and route adjustment capabilities enable the present method to respond to both static and dynamic obstacles without requiring complete replanning of the route.

Optionally, adjusting the route comprises sending one or more of steering commands, velocity commands and acceleration commands to the vehicle based on at least one of relative speed of the detected objects and distance to the detected objects. The control unit calculates adjustment commands using control algorithms that process multiple parameters simultaneously. Herein, the steering commands modify the vehicle path to create spatial separation from detected objects while maintaining trajectory changes. The velocity commands regulate the vehicle speed to maintain safe time-to-collision margins with detected objects. The acceleration commands ensure smooth speed transitions that maintain vehicle stability while responding to obstacles. The present method involves considering both the current state of the vehicle and predicted movement of detected objects. The method also involves integrating multiple sensor inputs to maintain accurate relative speed and distance measurements for all detected objects.

This adaptive command generation results in precise vehicle control that maintains safety while minimizing disruption to the planned route. The integrated approach to command generation enables efficient obstacle avoidance manoeuvres that optimize the balance between safety and operational efficiency.

Optionally, the method further comprises:
classifying detected objects into categories comprising controlled objects, dynamic objects, semi-static objects, and static objects;
maintaining different minimum stopping distances for each category of the objects; and
adjusting the route when a given object approaches the safety zone based on the category of the given object.

The classification process uses pattern recognition algorithms to categorize each detected object based on sensor data. Herein, the controlled objects category includes vehicles and equipment under direct control of the system; the dynamic objects category includes moving objects like pedestrians and independently operated vehicles; the semi-static objects category includes temporarily stationary objects that might move, such as parked vehicles; and the static objects category includes permanent infrastructure elements like walls and pillars. The present method involves maintaining a database of minimum stopping distances for each object category, calculated based on object behaviour characteristics and safety requirements. The minimum stopping distances are continuously updated based on environmental conditions and operational parameters.

Such categorized object handling provides optimized safety responses that account for different types of obstacles. The classification-based approach enables the present method to implement appropriate avoidance strategies for different types of objects while maintaining operational efficiency.

The method further includes establishing the communication link with the vehicle. Herein, the control unit initiates a secure bidirectional data connection using standardized protocols. The communication link supports multiple channels for different types of data, including control commands, vehicle status updates, and safety-critical messages. The communication link may also implement error detection and correction mechanisms to ensure reliable command transmission. The communication system includes fallback modes that maintain essential functions even under degraded network conditions. The communication link is continuously monitored for quality and latency to ensure it meets the requirements for real-time vehicle control.

This secure communication feature provides reliable and safe vehicle control. The communication link ensures that control commands reach the vehicle with minimal latency and that vehicle status information is reported back in near real-time to the control unit. The multiple communication channels and fallback modes enhance reliability by providing redundancy, while the secure nature of the communication prevents unauthorized access or interference with vehicle operations.

Optionally, establishing the communication link with the vehicle comprises:
authenticating the vehicle through communication with a vehicle system associated with the vehicle; and
initiating and maintaining communication with the vehicle throughout the autonomous movement of the vehicle.

The authentication process implements secure cryptographic protocols to verify the identity of the vehicle and establish trusted communication. For this purpose, the control unit exchanges security credentials with the vehicle system to ensure that only authorized vehicles can participate in autonomous operations. The authentication procedure includes verification of vehicle capabilities to confirm that the vehicle can safely execute the commands issued by the control unit. The communication initiation process establishes multiple parallel channels for different types of data exchange, including control commands, vehicle status updates, and diagnostic information. The method involves implementing continuous connection monitoring to detect and respond to any communication issues during vehicle movement. The communication protocols include handshaking mechanisms that regularly confirm the integrity of the communication link.

This secure authentication and communication approach results in prevention of unauthorized access while maintaining reliable control throughout operations. The authentication prevents security vulnerabilities that could compromise safety or operational integrity. The continuous monitoring ensures that the control unit maintains proper command and control of the vehicle throughout the autonomous movement process.

The method further includes controlling, by the control unit, via the communication link, autonomous movement of the vehicle from the current location of the vehicle to the location of the designated charging station according to the autonomous vehicle movement plan. The control unit continuously sends steering, acceleration, and braking commands to guide the vehicle along the planned path. These commands are generated by comparing the vehicle's current position and orientation with the desired trajectory from the movement plan. For present purposes, the control unit implements a hierarchical control structure. The control system includes multiple safety layers that monitor vehicle movement and can trigger emergency stops if needed. The control algorithms account for vehicle dynamics and environmental conditions to ensure smooth and stable movement.

This control approach enables both high-level path following and low-level vehicle stability control, ensuring that vehicles move efficiently while maintaining safety margins. The continuous monitoring and safety systems provide multiple layers of protection against control failures or unexpected situations, thereby providing reliable autonomous operations in complex environments.

The method further includes managing, by the control unit, charging operations for the vehicle at the designated charging station. This includes monitoring the physical connection between vehicle and charging station, controlling power delivery parameters, and tracking charging progress. The management process implements charging algorithms that optimize power delivery based on vehicle battery characteristics and grid conditions. The management process can also coordinate multiple simultaneous charging sessions to optimize power distribution across multiple vehicles. The control unit maintains constant communication with both vehicle and charging station during the charging process to ensure safety and efficiency.

This charging management feature optimizes energy transfer and improved charging efficiency, ensuring that vehicles receive optimal charging profiles while considering grid capacity and energy costs. The integrated monitoring and control capabilities prevent charging-related issues and enable quick response to any anomalies, thereby maintaining safety and reliability of charging operations.

Optionally, the method further comprises processing user interactions through a user interface, on a user device, by:
displaying availability status of the one or more charging stations;
receiving a vehicle charging request, including information about one or more of charge requirement and charging schedule;
receiving a vehicle return request; and
managing payments for charging sessions.

Herein, the user interface is implemented on the user device which may be in the form of a display of the vehicle system or a smartphone of the user, or the like. The user interface is designed to provide consistent functionality across multiple device types and screen sizes. The displaying of the availability of the charging station includes real-time status information, estimated waiting times, and compatibility information for different vehicle types. The user interface provides interactive elements that enable users to specify detailed charging requirements including desired charge level, time constraints, and priority settings. The vehicle return request function allows users to recall their vehicle from charging operations at any time, with the system architecture providing safely interrupting of charging if necessary. The payment management feature integrates with multiple payment methods and provides transparent cost information before, during, and after charging sessions. The user interface implements secure data handling protocols to protect user information and payment details.

Such user interface enhances user experience through detailed information access and intuitive interaction with the charging system. The user interface reduces training requirements and/or user errors. Further, the integrated payment management feature simplifies making payment for the charging process and increases user satisfaction.

Optionally, the method further comprises managing, by the control unit, a charging session of the vehicle by:
receiving a vehicle return request;
coordinating disconnection of the vehicle, corresponding to the vehicle return request, from the designated charging station in response to the vehicle return request;
generating an autonomous return movement plan for the vehicle; and
controlling autonomous movement of the vehicle from the designated charging station to a designated parking location according to the autonomous return movement plan.

The control unit processes return requests with priority handling to ensure prompt response to user needs. The disconnection coordination includes a safe power-down sequence that protects both the vehicle and charging infrastructure from electrical damage. The present method involves verifying successful disconnection through multiple one or more steps (as required) before initiating vehicle movement. The autonomous return movement plan generation follows the same safety and efficiency principles as the initial movement planning, with consideration for current operational area conditions. The method involves selecting the most appropriate parking location based on user preferences, operational area capacity, and efficient space utilization. The autonomous return movement is executed with the same safety monitoring and obstacle avoidance capabilities used for charging station approach.

Such managed return capability provides end-to-end automation of the charging process with flexibility to accommodate changing user requirements. The coordinated disconnection process ensures safety while minimizing delay between request and vehicle return. The integrated approach to return movement planning and execution maintains consistent safety standards throughout all autonomous operations.

Optionally, the method further comprises:
monitoring connection status of the vehicle with the designated charging station;
tracking charging progress of the vehicle; and
controlling power distribution to the designated charging station based on the charging progress and the received vehicle charging request.

The connection status monitoring employs multiple sensors that detect both physical connection integrity and electrical parameter values. The present method involves performing regular diagnostics to identify any potential issues with the charging connection. The charging progress tracking includes monitoring of voltage, current, temperature, and battery state parameters throughout the charging process. The power distribution control implements adaptive charging algorithms that optimize charging rate based on battery characteristics, state of charge, and infrastructure capacity. The method involves adjusting charging parameters in near real-time to respond to changing conditions such as battery temperature or grid load variations. In present configuration, the control unit maintains detailed logs of all charging parameters for diagnostic and optimization purposes.

This comprehensive charging management optimizes battery charging performance while ensuring safety of both vehicle and charging infrastructure. The continuous monitoring enables early detection of potential issues and preventive intervention. The adaptive power distribution maximizes charging efficiency while protecting battery health and infrastructure capacity.

Optionally, the method further comprises:
executing, by the control unit, charging of the battery of multiple vehicles by:
controlling simultaneous autonomous movement of the multiple vehicles in the operational area;
managing the charging sessions of each of the multiple vehicles; and
managing the charging operations of each of the multiple vehicles.

The control unit implements traffic management algorithms to coordinate movements of multiple vehicles without conflicts. The present method involves maintaining dynamic collision avoidance between all moving vehicles through continuous position tracking and trajectory prediction. The multi-vehicle route planning considers timing of movements to optimize traffic flow throughout the operational area. The charging session management includes prioritization algorithms that balance individual vehicle needs with overall system efficiency. The method involves coordinating connection and disconnection sequences to minimize bottlenecks at charging stations. The charging operations management implements load balancing across available power resources to maximize total charging throughput.

Such multi-vehicle coordination maximizes throughput of the charging system while maintaining operational safety. The proposed integrated approach to movement and charging coordination enables efficient utilization of both physical space and charging resources. Further, the load balancing capabilities ensure optimal distribution of available power across multiple charging sessions.

The present disclosure also relates to the system as described above. Various embodiments and variants disclosed above, with respect to the aforementioned method as per the first aspect, apply *mutatis mutandis* to the system as per the second aspect.

The system for autonomous operation for charging of the battery of the vehicle within the operational area having one or more charging stations as described herein can be implemented using various hardware and software configurations. The control unit may be implemented using general-purpose computing hardware with specialized software, or using purpose-built hardware with embedded control logic. The system may be deployed as a standalone installation or integrated with existing facility management systems. The system architecture supports scalability from small installations with few charging stations to large facilities with dozens of charging stations and vehicles. The implementation includes diagnostic and maintenance interfaces that enable system health monitoring and troubleshooting. The system also implements data logging and analytics capabilities that support continuous improvement of operational efficiency.

This flexible implementation approach is adaptability to diverse operational requirements and facility configurations. The system can be tailored to specific operational needs while maintaining consistent safety and performance standards.

Optionally, in the system, the control unit is further configured to:
determine a route between the current location of the vehicle and the location of the designated charging station;
establish a safety zone around the vehicle based on the determined route;
detect objects entering the safety zone; and
adjust the route in response to the detected objects by sending one or more of steering commands, velocity commands and acceleration commands to the vehicle based on at least one of relative speed of the detected objects and distance to the detected objects.

The control unit utilizes path planning algorithms that generate optimized routes based on the current environmental conditions and vehicle parameters. The establishment of safety zone includes calculation of buffer distances that vary with vehicle speed, object type, and environmental conditions. Herein, the safety zone parameters are continuously updated based on real-time sensor data to maintain appropriate safety margins. The object detection feature implements multi-sensor fusion techniques to ensure reliable detection of all potential obstacles. The command generation feature involves calculating control parameters that maintain vehicle stability while executing avoidance manoeuvres. The system may also implement predictive algorithms that anticipate object movements and calculate proactive adjustments to maintain safety margins.

This integrated safety approach helps with maintenance of collision-free vehicle operation throughout the autonomous movement process. The dynamic adjustment of safety parameters enables the system to balance operational efficiency with safety requirements based on current conditions.

Optionally, in the system, the plurality of sensors comprises a plurality of LIDAR sensors arranged to monitor the operational area by detecting each point in the operational area using at least two LIDAR sensors of the plurality of LIDAR sensors; and
the control unit is configured to establish the communication link with the vehicle by:
authenticating the vehicle through communication with a vehicle system associated with the vehicle; and
initiating and maintaining communication with the vehicle throughout the autonomous movement of the vehicle.

In the system, the LIDAR sensors utilize complementary scanning patterns that ensure complete coverage of the operational area with minimal blind spots. The sensors operate at different wavelengths and pulse patterns to minimize interference while maximizing detection reliability. The system processes the multiple LIDAR data streams using parallel computing architectures that maintain real-time performance despite high data volumes. The authentication system implements security protocols with additional vehicle-specific validation to prevent unauthorized access. Further, herein, the communication maintenance includes automated channel switching and packet retransmission capabilities to maintain link integrity under challenging conditions. The system may also implement predictive signal quality monitoring that can trigger preventive actions before communication degradation affects operational safety.

These combined monitoring and communication features provide reliable environmental awareness coupled with secure vehicle control. The proposed configuration for LIDAR coverage significantly reduces the risk of undetected obstacles, while the secure communication ensures that control instructions reach the vehicle without interference or unauthorized modification.

Optionally, the system further comprises a user interface device communicatively coupled to the control unit and configured to:
display availability status of the one or more charging stations;
receive the vehicle charging request, including information about one or more of charge requirement and charging schedule;
receive a vehicle return request; and
manage payments for charging sessions.

The user interface device ensure usability for operators with different abilities and experience levels. The user interface implements responsive design that adapts to different screen sizes and device capabilities. Herein, the availability status includes graphical representations of charging station status, which may further incorporate colour coding and icons. The user interface provides structured input forms that guide users through the vehicle charging request process with input validation to prevent errors. The vehicle return request functionality includes confirmation steps to prevent accidental activation while maintaining quick access for genuine requests. The payment management component integrates with billing systems and provides transaction records for accounting purposes.

Such comprehensive user interface leads to improvement in operator efficiency and reduction in user errors. The intuitive visual presentation of system status enables quick understanding of current operations and available resources. The structured input validation prevents configuration errors that could otherwise lead to operational inefficiencies or user dissatisfaction.

Optionally, in the system, the control unit is further configured to:
monitor connection status of the vehicle with the designated charging station;
track charging progress of the vehicle;
control power distribution to the designated charging station based on the charging progress and the received vehicle charging request;
execute charging of batteries of multiple vehicles by:
   controlling simultaneous autonomous movement of the multiple vehicles in the operational area;
   managing charging sessions of each of the multiple vehicles; and
   managing charging operations of each of the multiple vehicles.

In the present system, the connection monitoring implements multiple independent sensing techniques to provide redundant verification of proper physical and electrical connection. The charging progress tracking involves recording detailed performance metrics throughout the charging cycle for optimization and diagnostics. The power distribution control involves implementing load management algorithms that consider both instantaneous capacity and predicted future demands. The multi-vehicle movement control involves utilizing traffic management techniques to ensure safe and efficient vehicle coordination. The charging session management involves implementing scheduling algorithms that balance individual vehicle priorities with overall system efficiency. The multi-vehicle charging operations include power quality monitoring and load balancing to prevent infrastructure overload while maximizing charging throughput.

These advanced control capabilities maximizes operational efficiency while maintaining safety and charging performance standards. The proposed monitoring and control approach enables simultaneous handling of multiple vehicles throughout the charging cycle without compromising individual charging performance.

The method and the system of the present disclosure for autonomous operation for charging of the battery of the vehicle within the operational area having one or more charging stations, provide a comprehensive solution for managing vehicle charging operations without manual intervention. The integration of real-time environmental monitoring through the plurality of sensors, advanced processing of tracking data to generate the real-time digital map, and the controlled autonomous movement of vehicles enables complete automation of the charging process from request to completion. The method and the system maintain constant awareness of all objects within the operational area and implements sophisticated safety mechanisms that ensure collision-free vehicle movement. The method and the system combine multiple technical elements including sensor data processing, vehicle communication, movement control, and charging management into a unified operational framework that addresses key aspects of autonomous charging operations.

The method and the system of the present disclosure provide substantial improvements in operational efficiency and resource utilization compared to conventional charging approaches. The autonomous movement capability eliminates the need for manual vehicle relocation, thereby reducing labour requirements and human error potential. The real-time monitoring and adjustment capabilities enable to operate effectively in dynamic environments where object positions change frequently. The charging station designation and power management functions optimize utilization of charging infrastructure and reduce waiting times for charging services. The safety zone establishment and route adjustment features maintain operational safety without requiring conservative speed restrictions or excessive safety margins. The ability to handle multiple vehicles simultaneously significantly increases throughput compared to sequential charging approaches. The integrated user interface simplifies interaction while providing comprehensive status information and control capabilities.

The method and the system of the present disclosure are designed with adaptability and scalability as fundamental characteristics. The multi-sensor approach with redundant coverage enhances reliability by maintaining operational capability even when individual sensors are temporarily obstructed or malfunctioning. The classification of objects into different categories enables the system to implement appropriate responses to different types of obstacles while maintaining operational efficiency. The communication capabilities support secure and reliable vehicle control throughout the autonomous movement process. The system architecture supports deployment across various operational environments with different physical layouts and charging requirements. The architecture enables integration with existing facility management systems and supports future expansion as charging needs increase.

### DETAILED DESCRIPTION OF THE DRAWINGS

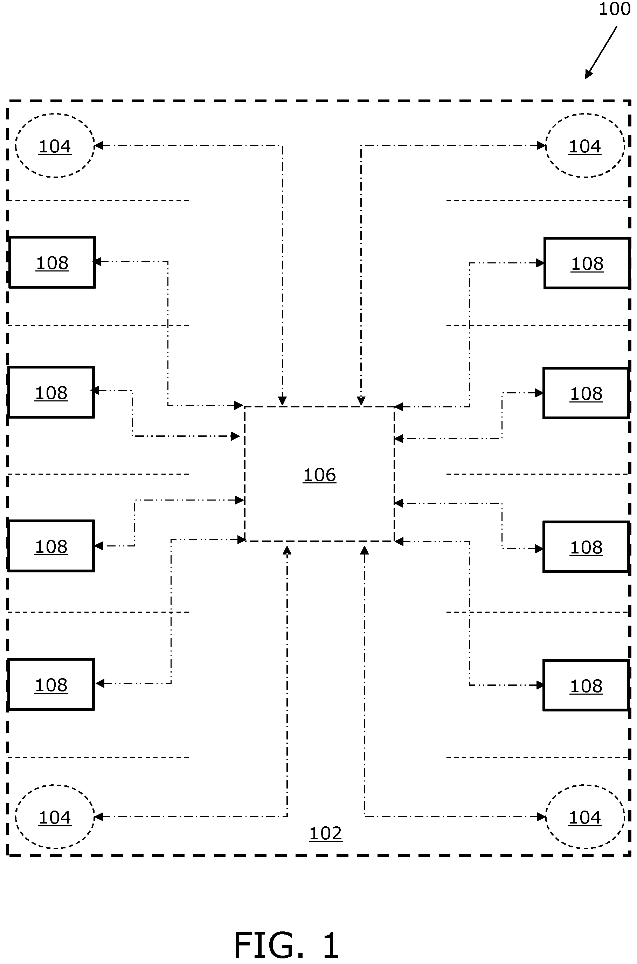

Referring to FIG. 1, illustrated is a schematic representation of a system 100 for autonomous operation for charging of a battery of a vehicle within an operational area, in accordance with an embodiment of the present disclosure. The system 100 comprises a plurality of sensors 104 arranged to monitor an operational area 102, and a control unit 106 communicatively coupled to the plurality of sensors 104. The operational area 102 includes one or more charging stations 108 and multiple parking spaces (as defined and shown, not labelled for clarity). In an example, at least one of the charging stations 108 is disposed in each one of the parking spaces. The system 100 further includes a communication infrastructure (not shown) that enables data exchange between the control unit 106 and a vehicle present within the operational area 102. The plurality of sensors 104 includes LIDAR sensors positioned at strategic locations to provide overlapping coverage of the operational area 102. The system 100 also includes a user interface device (not shown) communicatively coupled to the control unit 106 to enable user interactions with the system 100. The control unit 106 connects to the charging stations 108 via control links that enable monitoring and management of charging operations.

In one example use case, a logistics facility operates a fleet of electric delivery vehicles within a restricted operational area equipped with multiple charging stations. When a vehicle's battery level falls below a predefined threshold, a vehicle charging request is automatically generated and sent to the control unit. The control unit then designates an available charging station based on current station availability and the vehicle's location. A real-time digital map of the facility is generated using data from a plurality of LIDAR sensors. The control unit calculates a safe and efficient autonomous movement plan, guiding the vehicle to the designated charging station. The vehicle navigates autonomously while avoiding obstacles and dynamically adjusts its route based on real-time sensor data. Once the vehicle reaches the charging station, the control unit manages the charging operation until the battery reaches the desired charge level. Upon completion, the vehicle autonomously returns to a designated parking location, ready for its next deployment. This use case demonstrates how the system enhances operational efficiency, eliminates the need for manual intervention, and ensures optimal utilization of charging resources.

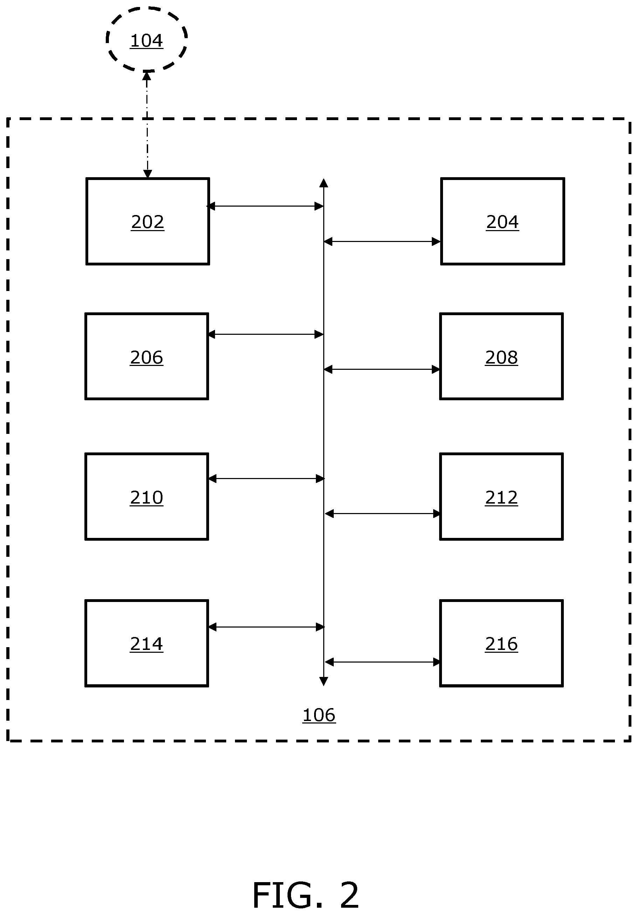

Referring to FIG. 2, illustrated is a block diagram of data flows within the control unit 106 of the system 100 shown in FIG. 1, in accordance with an embodiment of the present disclosure. The control unit 106 includes multiple functional modules that process different aspects of the autonomous charging operations. In FIG. 2, a sensor data processing module 202 receives and processes raw data from the plurality of sensors 104. An environmental mapping module 204 generates and maintains the real-time digital map based on processed sensor data. A vehicle tracking module 206 identifies and tracks all vehicles within the operational area 102. A path planning module 208 generates autonomous vehicle movement plans based on the digital map and destination information. A vehicle communication module 210 manages the communication link with vehicles. A charging management module 212 oversees all aspects of vehicle charging operations. A user interface module 214 handles interactions with the user interface device. A security and authentication module 216 ensures secure operation of all system components. The interconnections between these modules represent data flows that enable integrated system operation.

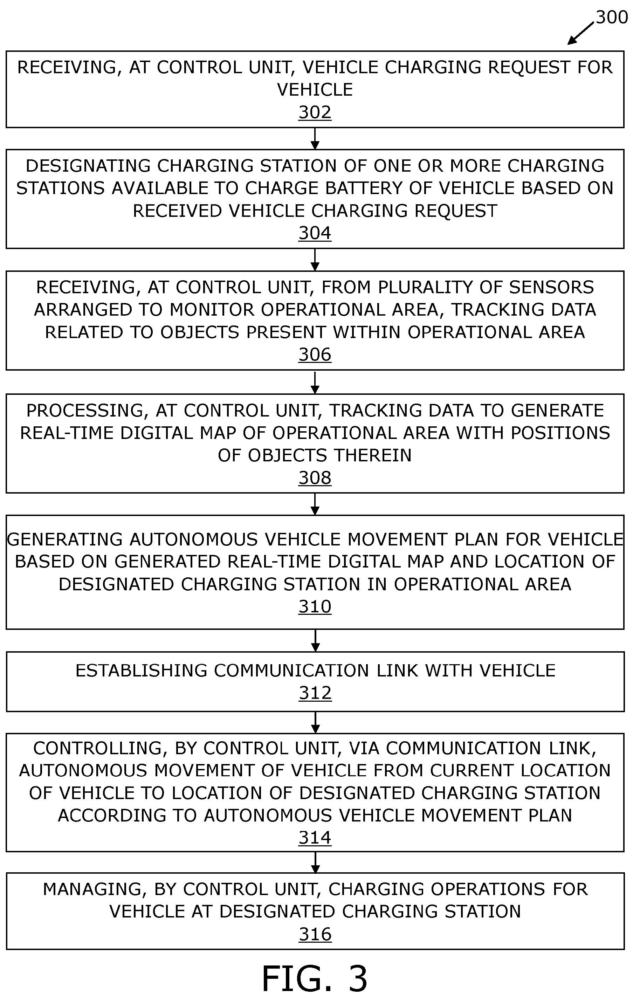

Referring to FIG. 3, illustrated is a flow diagram listing steps of a method 300 for autonomous operation for charging of a battery of a vehicle within an operational area, in accordance with an embodiment of the present disclosure. At step 302, a vehicle charging request is received at a control unit. At step 304, a charging station is designated based on the received vehicle charging request. At step 306, tracking data related to objects present within the operational area is received from a plurality of sensors. At step 308, the tracking data is processed to generate a real-time digital map of the operational area with positions of objects therein. At step 310, an autonomous vehicle movement plan is generated based on the real-time digital map and a location of the designated charging station. At step 312, a communication link is established with the vehicle. At step 314, autonomous movement of the vehicle is controlled from a current location to the location of the designated charging station according to the autonomous vehicle movement plan. At step 316, charging operations for the vehicle at the designated charging station are managed.

In an exemplary scenario, in a factory setting, an electric forklift operating in a warehouse has a battery that is running low. The onboard system automatically generates a vehicle charging request and transmits it to the control unit (step 302). The control unit designates an available charging station near the loading bay (step 304). A network of LIDAR sensors positioned around the warehouse monitors the operational area and transmits tracking data on the positions of other forklifts, objects, and potential obstacles (step 306). The control unit processes this sensor data to create a real-time digital map of the warehouse, showing static objects such as shelving units and dynamic objects like moving forklifts (step 308). Based on this digital map, the control unit generates a safe and efficient autonomous movement plan that guides the forklift to the designated charging station while avoiding collisions (step 310). The control unit then establishes a secure communication link with the forklift to transmit movement commands and status updates (step 312). The forklift autonomously navigates to the designated charging station, following the planned path and adjusting for any unexpected obstacles (step 314). Upon reaching the charging station, the control unit manages the charging process, ensuring the forklift is charged to the required level before it is needed for further operations (step 316).

The aforementioned steps 302-316 are only illustrative, and other alternatives can also be provided where one or more steps are added, one or more steps are removed, or one or more steps are provided in a different sequence without departing from the scope of the claims herein.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A method (300) for autonomous operation for charging of a battery of a vehicle within an operational area (102) having one or more charging stations (108), the method (300) comprising:
receiving, at a control unit (106), a vehicle charging request for the vehicle;
designating a charging station (108) of the one or more charging stations (108) available to charge the battery of the vehicle based on the received vehicle charging request;
receiving, at the control unit (106), from a plurality of sensors (104) arranged to monitor the operational area (102), tracking data related to objects present within the operational area (102);
processing, at the control unit (106), the tracking data to generate a real-time digital map of the operational area (102) with positions of objects therein;
generating an autonomous vehicle movement plan for the vehicle based on the generated real-time digital map and a location of the designated charging station (108) in the operational area (102);
establishing a communication link with the vehicle;
controlling, by the control unit (106), via the communication link, autonomous movement of the vehicle from a current location of the vehicle to the location of the designated charging station (108) according to the autonomous vehicle movement plan; and
managing, by the control unit (106), charging operations for the vehicle at the designated charging station (108).

2. The method (300) of claim 1, wherein generating the autonomous vehicle movement plan comprises:
determining a route between the current location of the vehicle and the location of the designated charging station (108);
establishing a safety zone around the vehicle based on the determined route;
detecting objects entering the safety zone; and
adjusting the route in response to the detected objects.

3. The method (300) of claim 2, wherein adjusting the route comprises sending one or more of steering commands, velocity commands and acceleration commands to the vehicle based on at least one of relative speed of the detected objects and distance to the detected objects.

4. The method (300) of any of claims 2 and 3, further comprising:
classifying detected objects into categories comprising controlled objects, dynamic objects, semi-static objects, and static objects;
maintaining different minimum stopping distances for each category of the objects; and
adjusting the route when a given object approaches the safety zone based on the category of the given object.

5. The method (300) of claim 1, wherein the plurality of sensors (104) comprises a plurality of LIDAR sensors, and wherein the operational area (102) is monitored by the plurality of LIDAR sensors by detecting each point in the operational area (102) using at least two LIDAR sensors of the plurality of LIDAR sensors.

6. The method (300) of any of preceding claims, wherein establishing the communication link with the vehicle comprises:
authenticating the vehicle through communication with a vehicle system associated with the vehicle; and
initiating and maintaining communication with the vehicle throughout the autonomous movement of the vehicle.

7. The method (300) of any of preceding claims, further comprising processing user interactions through a user interface, on a user device, by:
displaying availability status of the one or more charging stations (108);
receiving a vehicle charging request, including information about one or more of charge requirement and charging schedule;
receiving a vehicle return request; and
managing payments for charging sessions.

8. The method (300) of any of preceding claims, further comprising managing, by the control unit (106), a charging session of the vehicle by:
receiving a vehicle return request;
coordinating disconnection of the vehicle, corresponding to the vehicle return request, from the designated charging station (108) in response to the vehicle return request;
generating an autonomous return movement plan for the vehicle; and
controlling autonomous movement of the vehicle from the designated charging station (108) to a designated parking location according to the autonomous return movement plan.

9. The method (300) of any of preceding claims, further comprising managing, by the control unit (106), charging operations for the vehicle by:
monitoring connection status of the vehicle with the designated charging station (108);
tracking charging progress of the vehicle; and
controlling power distribution to the designated charging station (108) based on the charging progress and the received vehicle charging request.

10. The method (300) of any of claims 8 and 9, further comprising executing, by the control unit (106), charging of the battery of multiple vehicles by:
controlling simultaneous autonomous movement of the multiple vehicles in the operational area (102);
managing the charging sessions of each of the multiple vehicles; and
managing the charging operations of each of the multiple vehicles.

11. A system (100) for autonomous operation for charging of a battery of a vehicle within an operational area (102) having one or more charging stations (108), the system (100) comprising:
a plurality of sensors (104) arranged to monitor the operational area (102);
a control unit (106) communicatively coupled to the plurality of sensors (104) and configured to:
receive a vehicle charging request for the vehicle;
designate a charging station (108) of the one or more charging stations (108) available to charge the battery of the vehicle based on the received vehicle charging request;
receive, from the plurality of sensors (104), tracking data related to objects present within the operational area (102);
process the tracking data to generate a real-time digital map of the operational area (102) with positions of objects therein;
generate an autonomous vehicle movement plan for the vehicle based on the generated real-time digital map and a location of the designated charging station (108) in the operational area (102);
establish a communication link with the vehicle;
control, via the communication link, autonomous movement of the vehicle from a current location of the vehicle to the location of the designated charging station (108) according to the autonomous vehicle movement plan; and
manage charging operations for the vehicle at the designated charging station (108).

12. The system (100) of claim 11, wherein the control unit (106) is further configured to:
determine a route between the current location of the vehicle and the location of the designated charging station (108);
establish a safety zone around the vehicle based on the determined route;
detect objects entering the safety zone; and
adjust the route in response to the detected objects by sending one or more of steering commands, velocity commands and acceleration commands to the vehicle based on at least one of relative speed of the detected objects and distance to the detected objects.

13. The system (100) of any of claims 11 or 12, wherein:
the plurality of sensors (104) comprises a plurality of LIDAR sensors arranged to monitor the operational area (102) by detecting each point in the operational area (102) using at least two LIDAR sensors of the plurality of LIDAR sensors; and
the control unit (106) is configured to establish the communication link with the vehicle by:
authenticating the vehicle through communication with a vehicle system associated with the vehicle; and
initiating and maintaining communication with the vehicle throughout the autonomous movement of the vehicle.

14. The system (100) of any of claims 11-13, further comprising a user interface device communicatively coupled to the control unit (106) and configured to:
display availability status of the one or more charging stations (108);
receive the vehicle charging request, including information about one or more of charge requirement and charging schedule;
receive a vehicle return request; and
manage payments for charging sessions.

15. The system (100) of any of claims 11-14, wherein the control unit (106) is further configured to:
monitor connection status of the vehicle with the designated charging station (108);
track charging progress of the vehicle;
control power distribution to the designated charging station (108) based on the charging progress and the received vehicle charging request;
execute charging of batteries of multiple vehicles by:
controlling simultaneous autonomous movement of the multiple vehicles in the operational area (102);
managing charging sessions of each of the multiple vehicles; and
managing charging operations of each of the multiple vehicles.
